# EUROPEAN PATENT SPECIFICATION

(11) **EP 4 357 522 B1**
(45) Date of publication and mention of the grant of the patent: **07.05.2025**
(21) Application number: 22202547.0
(22) Date of filing: 19.10.2022
(51) Int. Cl.: D21H 27/30, D21H 27/38, D21H 11/02

(54) **PAPERBOARD COMPRISING RECYCLED FIBRES**
KARTON MIT RECYCELTEN FASERN
CARTON COMPRENANT DES FIBRES RECYCLÉES

(43) Date of publication of application: 24.04.2024
(73) Proprietor: Billerud Aktiebolag (publ), 169 27 Solna (SE)
(72) Inventor: HÄGGQUIST, Mats, 802 69 Gävle (SE); NORDSTRÖM, Fredrik, 652 26 Karlstad (SE)
(74) Representative: Kransell & Wennborg KB

(56) References cited:
- EP-A1- 2 762 637
- WO-A1-01/88269
- WO-A1-2015/036930

## Description

### TECHNICAL FIELD

The present disclosure relates to the field of paperboard and production thereof.

### BACKGROUND

Traditionally, only virgin pulps have been used to form high-quality paperboard. In case of a multi-layered paperboard of at least three layers, which is a common type of paperboard in Europe, chemical pulps, predominantly kraft pulps, are typically used for the outer layers, while a mechanical pulp in combination with a chemical pulp is often used for the middle layer(s). Further, broke pulp, which is inevitably generated in paperboard production, is typically included in the formation of paperboard.

### SUMMARY

The objective of the present disclosure is to include recycled fibres in paperboard while maintaining or even improving properties characteristic of high-quality paperboard.

Accordingly, the present disclosure provides a method of producing a paperboard comprising a top layer, a back layer and a middle layer, said method comprising the steps of:
- providing a first fraction of a pulp of recycled bleached fibers, which first fraction has a Schopper-Riegler value measured according to ISO 5267-1:1999 of below 24;
- forming a middle layer furnish comprising a chemithermomechanical pulp (CTMP) and the first fraction; and
- forming said middle layer from said middle layer furnish
wherein the first fraction constitutes at least 15% by dry weight of the middle layer furnish and the CTMP constitutes at least 20% by dry weight of the middle layer furnish.

The present disclosure further provides a paperboard comprising a top layer, a back layer and a middle layer, wherein the middle layer comprises:
- a first fraction of a pulp of recycled bleached fibers, which first fraction has a Schopper-Riegler value measured according to ISO 5267-1:1999 of below 24; and
- chemithermomechanical pulp (CTMP).

As shown in the Examples section below, the present disclosure enables the formation of a paperboard of equal bending resistance as that of a prior art paperboard (formed from virgin pulp only) at a lower total fibre consumption. In other words, the present disclosure not only enables the introduction of a significant portion of recycled fibres in high-quality paperboard without sacrificing the bending resistance of the board, but it also enables a reduction of the amount of fibres needed to reach the desired bending resistance.

### DETAILED DESCRIPTION

As first aspect of the present disclosure, there is provided a method of producing a paperboard comprising a top layer, a back layer and a middle layer. As understood by the skilled person, the middle layer is arranged between the top layer and the back layer. The top layer is preferably a white top layer, i.e. a layer formed from bleached fibres. The top layer is typically intended for printing. Hence, the top layer may be provided with a pigment-based coating, which may consist of several sublayers applied in consecutive coating steps.

The method comprises the steps of:
- providing a first fraction of a pulp of recycled bleached fibers, which first fraction has a Schopper-Riegler value measured according to ISO 5267-1:1999 of below 24, preferably below 22, more preferably below 20;
- forming a middle layer furnish comprising a chemithermomechanical pulp (CTMP) and the first fraction; and
- forming said middle layer from said middle layer furnish.

The first fraction constitutes at least 15% by dry weight of the middle layer furnish, such as at least 25% by dry weight of the middle layer furnish. An upper limit may be 60% by dry weight of the middle layer furnish.

CTMP constitutes at least 20% by dry weight of the middle layer furnish, such as at least 30% by dry weight of the middle layer furnish. An upper limit may be 50% by dry weight of the middle layer furnish.

In one embodiment, said middle layer furnish further comprises broke pulp. The broke pulp may constitute at least 12% by dry weight of the middle layer furnish, such as at least 17% by dry weight of the middle layer furnish. An upper limit may be 35% by dry weight of the middle layer furnish.

In an embodiment, the density according to ISO 534:2011 of first fraction is below 610 kg/m³ after sheet forming according to ISO 5269-2:2004. As an example, this density may be 550-610 kg/m³.

In one embodiment, the tensile stiffness index according to ISO 1924-3:2011 of the first fraction is at least 4.6 MNm/kg after sheet forming according to ISO 5369-2:2004. As an example, this tensile stiffness index may be 4.6-5.3 MNm/kg.

The middle layer furnish may further comprise one or more strength agents, such as starch (preferably cationic starch), carboxymethyl cellulose (CMC) and/or microfibrillated cellulose (MFC).

In one embodiment, the paperboard is a liquid packaging board (LPB). In such an embodiment, each of the (fibre-based) layers of the paperboard comprise hydrophobic size. The hydrophobic size is preferably selected from the group consisting of ASA, AKD, rosin size and combinations thereof.

The amount of hydrophobic size in the middle layer furnish may for example be at least 2.5 kg/tonne dry fibre, such as at least 3.0 kg/tonne dry fibre. The amount of hydrophobic size in the outer layers is preferably lower than the amount of hydrophobic size in the middle layer.

In a preferred embodiment, the hydrophobic size in each of the furnishes of the method of the first aspect is a combination of AKD and rosin size. When such a combination is used, the headbox pH of the furnishes is preferably in the range of 6.6-7.2, such as 6.9-7.1.

In one embodiment, the first fraction is obtained by hydrocyclone fractionation of the pulp of recycled bleached fibers (see e.g. Example 2 below). In such an embodiment, the Schopper-Riegler value measured according to ISO 5267-1:1999 is preferably below 20, more preferably below 19.

In another embodiment, the first fraction is obtained by screening of the pulp of recycled bleached fibers (see e.g. Example 1 below).

In an embodiment of the method in which the top layer is a white top layer, said method further comprises:
- providing a second fraction of the pulp of recycled bleached fibers;
- forming a top layer furnish comprising the second fraction; and
- forming said top layer from said top layer furnish.

In this embodiment, second fraction has a Schopper-Riegler value (measured according to ISO 5267-1:1999) above that of the first fraction, e.g. above 24, such as above 31. It follows from the above that the second fraction is preferably obtained by hydrocyclone fractionation of the pulp of recycled bleached fibers. However, it may also be obtained by screening of the pulp of recycled bleached fibers.

In an embodiment, the density according to ISO 534:2011 of second fraction is above 600 kg/m³ after sheet forming according to ISO 5269-2:2004. As an example, this density may be at least 610 kg/m³, such as 610-650 kg/m³.

In one embodiment, the tensile stiffness index according to ISO 1924-3:2011 of the second fraction is at least 4.8 MNm/kg after sheet forming according to ISO 5269-2:2004. As an example, this tensile stiffness index may be 5.0-5.4 MNm/kg.

The first fraction to second fraction mass flow ratio may for example be in the range of 1:1 to 1:2, such as in the range of 1:1.1 to 1:2, such as in the range of 1:1.2 to 1:1.9.

In one embodiment, the second fraction constitutes at least 25% by dry weight of the top layer furnish, such as at least 35% by dry weight of the top layer furnish, such as at least 45% by dry weight of the top layer furnish.

In addition to the second fraction, the white top layer furnish preferably comprises a bleached chemical pulp, such as a bleached kraft pulp. As understood by the skilled person, this chemical pulp is a virgin pulp.

Also, the method of the first aspect may further comprise the steps of:
- forming a back layer furnish comprising at least 60% by dry weight of kraft pulp, such as at least 70% by dry weight of kraft pulp; and
- forming said back layer from said back layer furnish.

In one embodiment, the back layer furnish further comprises broke pulp.

The grammage, excluding any coating layers, of the paperboard formed by the method of the first aspect may for example be 120-400 g/m² when measured according to ISO 536:2019. If pigment-coating layers are included, the grammage may be 140-420 g/m², such as 150-350 g/m².

The grammage of the middle layer is preferably higher than the grammage of the top layer. In one embodiment, the grammage of the middle layer is higher than the grammage of each of the top layer and the back layer. As an example, each of the top layer and the back layer may have a grammage below 80 g/m², while the grammage of the middle layer is above 100 g/m², such as at least 115 g/m², such as 115-150 g/m².

In a particular embodiment, the grammage of the top layer is below 80 g/m², the grammage of the back layer is below 65 g/m² and the grammage of the middle layer is higher than the grammage of each of the top layer and the back layer, e.g. above 100 g/m².

In one embodiment, recycled fibres constitute 18%-32% by dry weight of the total amount of fibres used to form the paperboard according to the first aspect.

In one embodiment, the top layer furnish and the back layer furnish comprise no recycled pulp or broke pulp.

In one embodiment, CTMP constitutes 16%-22% by dry weight of the total amount of fibres used to form the paperboard according to the first aspect.

In one embodiment, broke pulp constitutes 10%-20%, such as 10%-16%, by dry weight of the total amount of fibres used to form the paperboard according to the first aspect.

As understood by the skilled person, the method of the first aspect typically comprises a step of couching to join the paperboard layers to each other.

As a second aspect of the present disclosure paperboard, such as a paperboard obtained according to the first aspect. The paperboard of the first aspect comprises a top layer (preferably a white top layer), a back layer and a middle layer, wherein the middle layer is formed from a furnish comprising a first fraction of a pulp of recycled bleached fibers and chemithermomechanical pulp (CTMP). The first fraction has a Schopper-Riegler value measured according to ISO 5267-1:1999 of below 24. The first fraction constitutes at least 15% by dry weight of the middle layer and the CTMP constitutes at least 20% by dry weight of the middle layer

The embodiments of the first aspect apply to the second aspect *mutatis mutandis.*

### EXAMPLES

A white recycled paper "White High Grade" was purchased from the company Prezero. The recycled paper was slushed in a pulper for 15 minutes to produce a crude recycled pulp that was stored in a tank. The crude recycled pulp was subjected to coarse screening using a screen having 2 mm diameter holes to obtain a recycled pulp and a coarse reject. The main reason for the coarse screening was to remove trash and impurities.

The recycled pulp was fractionated by screening to obtain a long fibre fraction and a short fibre fraction (see Example 1 below) or by hydrocyclones to obtain a coarse fibre fraction and a fine fibre fraction (see Example 2 below). Unfractionated recycled pulp was however used in Example 3.

In many board applications, the bending resistance may be considered the most important parameter. Hence, the effect on bending resistance of including the recycled pulp in a board structure was calculated using the layer grammage and the density and tensile stiffness index (TSI) values in accordance with the method devised by Carlsson and Fellers in a journal article titled FLEXURAL STIFFNESS OF MULTI-PLYPAPERBOARD (Fibre Science and Technology 13 (1980) 213-223). This required the conversion of bending stiffness (*S^{b}*) values to bending resistance values (having the unit mN), which was done according to the following formula: *Bending resistance (mN) = S^{b}*/*0.084* (see Pappersteknik page 318, Gavelin, FoU medd. 13/1979).

In more detail, it was calculated which board grammage that was needed after replacing a portion of the pulp in a reference board with recycled fibres to obtain the same bending resistance as that of the reference board. The pulp replacements that were made are shown below.

In these calculations, a 250 g/m² prior art liquid packaging board structure having the composition of table 1 was used as a reference. The pulps of this prior art board structure were the following:
- Bleached hardwood kraft pulp (BHKP) having a density of 750 kg/m³ and a TSI of 7.0 MNm/kg;
- More refined bleached softwood kraft pulp (BSKP high) having a density of 692 kg/m³ and a TSI of 5.1 MNm/kg;
- Less refined bleached softwood kraft pulp (BSKP low) having a density of 654 kg/m³ and a TSI of 4.5 MNm/kg;
- Unbleached kraft pulp (UKP) having a density of 681 kg/m³ and a TSI of 5.5 MNm/kg;
- CTMP having a density of 456 kg/m³ and a TSI of 3.1 MNm/kg; and
- Broke pulp (Broke) having a density of 647 kg/m³ and a TSI of 5.0 MNm/kg (the density and TSI values were determined according to ISO 534:2011 and ISO 1924-3:2011, respectively, after sheet forming according to ISO 5269-2:2004).

**Table 1. Reference (1^{st}) board structure**

| Layer | Pulp composition | Gsm (g/m²⁾ | Density (kg/m³⁾ | TSI (MNm/kg) |
|---|---|---|---|---|
| Top | BHKP: 30% | 70 | 709^{#} | 5.7 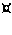 |
| | BSKP high: 70% | | | |
| Middle | CTMP: 35% | 130 | 583 | 4.1 |
| | Broke: 25% | | | |
| | BSKP low: 40% | | | |
| Back | UKP: 100% | 50 | 681 | 5.5 |

| | | | | |
|---|---|---|---|---|
| ^{#} 30%*750 + 70%*692 = 709 (corresponding calculations are used for the other layers of this Examples section) 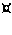 35%*3.1 + 25%*5.0 + 40%*4.5 = 4.1 (corresponding calculations are used for the other layers this Examples section) | | | | |

In the reference board structure and in the modified board structures presented belove, the proportion of broke pulp is about 13% to reflect a full-scale process in which a broke pulp stream corresponding to 13% of the total amount of fibres is generated and subsequently accommodated by the full-scale process.

### Example 1

The recycled pulp was fractionated by screening using a screen having 1 mm diameter holes to obtain a long fibre fraction and a short fibre fraction in a 39:61 mass flow ratio. Properties of the fractions are presented in table 2 below.

**Table 2. "Gsm" means grammage. "Gurley" means Gurley porosity. "TS" means tensile stiffness. "TSI" means tensile stiffness index. "Brightn." means Brightness D65.**

| Property | SR | Gsm* | Caliper* | Density* | Brightn.* | Gurley* | TS* | TSI* |
|---|---|---|---|---|---|---|---|---|
| Unit | | g/m² | µm | kg/m³ | % | s | kN/m | MNm/kg |
| Short fraction | 26-30 | 110 | 180 | 612 | 101 | 10.6 | 550 | 5.0 |
| Long fraction | 19-23 | 107 | 180 | 597 | 100 | 7.8 | 525 | 4.9 |

| | | | | | | | | |
|---|---|---|---|---|---|---|---|---|
| *Property measured after sheet forming according to ISO 5269-2:2004. | | | | | | | | |

Notably, the long fraction has higher TSI and lower density than the less refined bleached softwood kraft pulp (BSKP low). Further, the TSI of the short fraction is almost as high as that of the more refined bleached softwood kraft pulp (BSKP high), which is striking given that the short fraction has much lower density than the BSKP high.

### Example 1.1

To obtain a recycled fibre content of about 25%, the kraft pulp and some of the broke pulp of the middle layer of the reference board was replaced with the long fraction. To still accommodate all the broke pulp, some of it was added to the back layer. The resulting board composition is shown in table 3 below.

**Table 3. Inventive board structure 1.1.**

| Layer | Pulp composition | Density (kg/m³⁾ | TSI (MNm/kg) |
|---|---|---|---|
| Top | BHKP: 30% | 709 | 5.7 |
| | BSKP high: 70% | | |
| Middle | CTMP: 35% | 556 | 4.3 |
| | Broke: 17% | | |
| | BSKP low: 0% | | |
| | Long fraction: 48% | | |
| Back | UKP: 79% | 674 | 5.4 |
| | Broke: 21% | | |

The grammage needed for board structure 1.1 to reach the same bending resistance as the reference board is presented under Results below.

### Example 1.2

To obtain a recycled fibre content of about 25%, about half of the kraft pulp of the middle layer and most of the softwood kraft pulp of the top layer of the reference board were replaced with the long fraction and the short fraction, respectively. The resulting board composition is shown in table 4 below.

**Table 4. Inventive board structure 1.2.**

| Layer | Pulp composition | Density (kg/m³⁾ | TSI (MNm/kg) |
|---|---|---|---|
| Top | BHKP: 30% | 666 | 5.6 |
| | BSKP high: 16% | | |
| | Short fraction: 54% | | |
| Middle | CTMP: 35% | 572 | 4.2 |
| | Broke: 25% | | |
| | BSKP low: 21% | | |
| | Long fraction: 19% | | |
| Back | UKP: 100% | 681 | 5.5 |

The mass ratio between the long fraction in the middle layer and the short fraction in the back layer is the same as the above-mentioned mass flow ratio (i.e.

39:61). Accordingly, the composition of board structure 1.2 is such that the board accommodates all fibres of both fractions. The grammage needed for board structure 1.2 to reach the same bending resistance as the reference board is presented under Results below.

### Example 2

The recycled pulp was fractionated by hydrocyclones to obtain a coarse fibre fraction and a fine fibre fraction in a 38:62 mass flow ratio. Properties of the fractions are presented in table 5 below.

**Table 5. "Gsm" means grammage. "Gurley" means Gurley porosity. "TS" means tensile stiffness. "TSI" means tensile stiffness index. "Brightn." means Brightness D65.**

| Property | SR | Gsm* | Caliper* | Density* | Brightn.* | Gurley* | TS* | TSI* |
|---|---|---|---|---|---|---|---|---|
| Unit | | g/m² | µm | kg/m³ | % | s | kN/m | MNm/kg |
| Fine fraction | 29-37 | 109 | 176 | 620 | 99 | 15.8 | 561 | 5.2 |
| Coarse fraction | 17 | 89 | 155 | 574 | 101 | 2,9 | 453 | 5.1 |

| | | | | | | | | |
|---|---|---|---|---|---|---|---|---|
| *Property measured after sheet forming according to ISO 5269-2:2004. | | | | | | | | |

Notably, the coarse fraction has much higher TSI and much lower density than the less refined bleached softwood kraft pulp (BSKP low). Further, the TSI of the fine fraction is slightly higher than that of the more refined bleached softwood kraft pulp (BSKP high), which is striking given that the fine fraction has much lower density than the BSKP high.

### Example 2.1

To obtain a recycled fibre content of about 25%, the kraft pulp and some of the broke pulp of the middle layer of the reference board was replaced with the coarse fraction. To still accommodate all the broke pulp, some of it was added to the back layer. The resulting board composition is shown in table 6 below.

**Table 6. Inventive board structure 2.1.**

| Layer | Pulp composition | Density (kg/m³⁾ | TSI (MNm/kg) |
|---|---|---|---|
| Top | BHKP: 30% | 709 | 5.7 |
| | BSKP high: 70% | | |
| Middle | CTMP: 35% | 545 | 4.4 |
| | Broke: 17% | | |
| | BSKP low: 0% | | |
| | Coarse fraction: 48% | | |
| Back | UKP: 79% | 674 | 5.4 |
| | Broke: 21% | | |

The grammage needed for board structure 2.1 to reach the same bending resistance as the reference board is presented under Results below.

### Example 2.2

To obtain a recycled fibre content of 25%, about half of the kraft pulp of the middle layer and most of the softwood kraft pulp of the top layer of the reference board were replaced with the coarse fraction and the fine fraction, respectively. The resulting board composition is shown in table 7 below.

**Table 7. Inventive board structure 2.2.**

| Layer | Pulp composition | Density (kg/m³⁾ | TSI (MNm/kg) |
|---|---|---|---|
| Top | BHKP: 30% | 670 | 5.7 |
| | BSKP high: 15% | | |
| | Fine fraction: 55% | | |
| Middle | CTMP: 35% | 568 | 4.3 |
| | Broke: 25% | | |
| | BSKP low: 22% | | |
| | Coarse fraction: 18% | | |
| Back | UKP: 100% | 681 | 5.5 |

The mass ratio between the coarse fraction in the middle layer and the fine fraction in the back layer is the same as the above-mentioned mass flow ratio (i.e. 38:62). Accordingly, the composition of board structure 2.2 is such that the board accommodates all fibres of both fractions. The grammage needed for board structure 2.2 to reach the same bending resistance as the reference board is presented under Results below.

### Example 3 (2^{nd} reference)

To obtain a recycled fibre content of 25%, all of the softwood kraft pulp and most of the hardwood kraft pulp of the top layer were replaced with the (unfractionated) recycled pulp. The resulting board composition is shown in table 8 below.

**Table 8. Second reference board structure.**

| Layer | Pulp composition | Gsm (g/m²⁾ | Density (kg/m³⁾ | TSI (MNm/kg) |
|---|---|---|---|---|
| Top | BHKP: 11% | 70 | 624 | 4.8 |
| | BSKP high: 0% | | | |
| | Recycled pulp: 89% | | | |
| Middle | CTMP: 35% | 130 | 583 | 4.1 |
| | Broke: 25% | | | |
| | BSKP low: 40% | | | |
| Back | UKP: 100% | 50 | 681 | 5.5 |

The grammage needed for the second reference board structure to reach the same bending resistance as the reference board is presented under Results below.

### Results

**Table 9. Board structures having about the same bending resistance. "TL", "ML" and "BL" means top layer, middle layer and back layer, respectively. "Recycl." means recycled fibres. Numbers in bold shows change compared to reference.**

| Board structure | Layer grammage | Total grammage | Bending resistance | Broke (%) | Recycl. (%) | CTMP (%) |
|---|---|---|---|---|---|---|
| 1^{st} ref. | TL: 70 g/m² | 250 g/m² | 221.1 mN | 13.0 | 0 | 18.2 |
| | ML: 130 g/m² | | | | | |
| | BL: 50 g/m² | | | | | |
| 1.1 | TL: 70 g/m² | 244 g/m² **(-6 g/m²)** | 219.9 mN | 12.9 | 24.4 | 17.8 |
| | ML: 124 g/m² | | | | | |
| | BL: 50 g/m² | | | | | |
| 1.2 | TL: 70 g/m² | 246 g/m² **(-4 g/m²)** | 219.9 mN | 12.8 | 25.1 | 17.9 |
| | ML: 126 g/m² | | | | | |
| | BL: 50 g/m² | | | | | |
| 2.1 | TL: 70 g/m² | 242 g/m² **(-8 g/m²)** | 221.0 mN | 12.9 | 24.2 | 17.6 |
| | ML: 122 g/m² | | | | | |
| | BL: 50 g/m² | | | | | |
| 2.2 | TL: 70 g/m² | 245 g/m² **(-5 g/m²)** | 221.4 mN | 12.8 | 24.9 | 17.9 |
| | ML: 125 g/m² | | | | | |
| | BL: 50 g/m² | | | | | |
| 2^{nd} ref. | TL: 70 g/m² | 253 g/m² **(+3 g/m²)** | 222.0 mN | 13.1 | 24.6 | 18.4 |
| | ML: 133 g/m² | | | | | |
| | BL: 50 g/m² | | | | | |

As shown in Table 9, the inventive concept not only enables a replacement of a significant portion of virgin fibres by recycled fibres, but it also allows for a reduction of the total fibre consumption without a loss of bending resistance. Particularly beneficial results are obtained with hydrocyclone fractions (2.1, 2.2).

## Claims

1. A method of producing a paperboard comprising a top layer, a back layer and a middle layer, said method comprising the steps of:
- providing a first fraction of a pulp of recycled bleached fibers, which first fraction has a Schopper-Riegler value measured according to ISO 5267-1:1999 of below 24;
- forming a middle layer furnish comprising a chemithermomechanical pulp (CTMP) and the first fraction; and
- forming said middle layer from said middle layer furnish
wherein the first fraction constitutes at least 15% by dry weight of the middle layer furnish and the CTMP constitutes at least 20% by dry weight of the middle layer furnish.

2. The method of claim 1, wherein the first fraction constitutes at least 25% by dry weight of the middle layer furnish.

3. The method of claim 1 or 2, wherein the CTMP constitutes at least 30% by dry weight of the middle layer furnish.

4. The method of any one of the preceding claims, wherein said middle layer furnish further comprises broke pulp.

5. The method of claim 4, wherein broke constitutes at least 12% by dry weight of the middle layer furnish, such as at least 17% by dry weight of the middle layer furnish.

6. The method of any one of the preceding claims, wherein the first fraction has a Schopper-Riegler value measured according to ISO 5267-1:1999 of below 22, such as below 20.

7. The method of any one of the preceding claims, wherein the first fraction is obtained by hydrocyclone fractionation of the pulp of recycled bleached fibers.

8. The method of any one of the preceding claims, wherein the top layer is a white top layer, said method further comprising:
- providing a second fraction of the pulp of recycled bleached fibers, which second fraction has a Schopper-Riegler value measured according to ISO 5267-1:1999 of above 24;
- forming a top layer furnish comprising the second fraction; and
- forming said top layer from said top layer furnish.

9. The method of claim 8, wherein the second fraction is obtained by hydrocyclone fractionation of the pulp of recycled bleached fibers.

10. The method of claim 8 or 9, wherein the first fraction to second fraction mass flow ratio is in the range of 1:1 to 1:2, such as in the range of 1:1.1 to 1:2, such as in the range of 1:1.2 to 1:1.9.

11. The method of any one of claims 8-10, wherein the second fraction constitutes at least 25% by dry weight of the top layer furnish, such as at least 35% by dry weight of the top layer furnish, such as at least 45% by dry weight of the top layer furnish.

12. The method of any one of claims 8-11, wherein the top layer furnish further comprises a bleached chemical pulp, such as a bleached kraft pulp.

13. The method of any one of claims 8-12, wherein the second fraction has a Schopper-Riegler value measured according to ISO 5267-1:1999 of above 31.

14. The method of any one of the preceding claims, wherein the grammage of the middle layer is higher than the grammage of the top layer.

15. The method of claim 14, wherein the grammage of the middle layer is higher than the grammage of each of the top layer and the back layer.

16. A paperboard comprising a top layer, a back layer and a middle layer, wherein the middle layer comprises:
- a first fraction of a pulp of recycled bleached fibers, which first fraction has a Schopper-Riegler value measured according to ISO 5267-1:1999 of below 24; and
- chemithermomechanical pulp (CTMP)
wherein the first fraction constitutes at least 15% by dry weight of the middle layer and the CTMP constitutes at least 20% by dry weight of the middle layer.

## Patentansprüche

1. Verfahren zur Herstellung von Karton, aufweisend eine Deckschicht, eine Rückschicht und eine Mittelschicht, wobei das Verfahren die Schritte aufweist:
- Bereitstellen einer ersten Fraktion eines Zellstoffs aus recycelten gebleichten Fasern, wobei die erste Fraktion einen Schopper-Riegler-Wert, gemessen nach ISO 5267-1:1999, von unter 24 aufweist;
- Bilden eines Mittelschichtstoffs, der einen chemothermomechanischen Zellstoff (CTMP) und die erste Fraktion aufweist; und
- Bilden der Mittelschicht aus dem Mittelschichtstoff,
wobei die erste Fraktion mindestens 15 % des Trockengewichts des Mittelschichtstoffs ausmacht und der CTMP mindestens 20 % des Trockengewichts des Mittelschichtstoffs ausmacht.

2. Verfahren nach Anspruch 1, wobei die erste Fraktion mindestens 25 % des Trockengewichts des Mittelschichtstoffs ausmacht.

3. Verfahren nach Anspruch 1 oder 2, wobei der CTMP mindestens 30 % des Trockengewichts des Mittelschichtstoffs ausmacht.

4. Verfahren nach einem der vorhergehenden Ansprüche, wobei der Mittelschichtstoff ferner Ausschusszellstoff aufweist.

5. Verfahren nach Anspruch 4, wobei der Ausschuss mindestens 12 % des Trockengewichts des Mittelschichtstoffs, beispielsweise mindestens 17 % des Trockengewichts des Mittelschichtstoffs, ausmacht.

6. Verfahren nach einem der vorhergehenden Ansprüche, wobei die erste Fraktion einen Schopper-Riegler-Wert, gemessen nach ISO 5267-1:1999, von unter 22, beispielsweise unter 20, aufweist.

7. Verfahren nach einem der vorhergehenden Ansprüche, wobei die erste Fraktion durch Hydrozyklonfraktionierung des Zellstoffs aus recycelten gebleichten Fasern erhalten wird.

8. Verfahren nach einem der vorhergehenden Ansprüche, wobei die Deckschicht eine weiße Deckschicht ist, wobei das Verfahren ferner aufweist:
- Bereitstellen einer zweiten Fraktion des Zellstoffs aus recycelten gebleichten Fasern, wobei die zweite Fraktion einen Schopper-Riegler-Wert gemäß ISO 5267-1:1999 von über 24 aufweist;
- Bilden eines Deckschichtstoffs, der die zweite Fraktion aufweist; und
- Bilden der Deckschicht aus dem Deckschichtstoff.

9. Verfahren nach Anspruch 8, wobei die zweite Fraktion durch Hydrozyklonfraktionierung des Zellstoffs aus recycelten gebleichten Fasern erhalten wird.

10. Verfahren nach Anspruch 8 oder 9, wobei das Massenstromverhältnis der ersten Fraktion zur zweiten Fraktion im Bereich von 1:1 bis 1:2, beispielsweise im Bereich von 1:1,1 bis 1:2, beispielsweise im Bereich von 1:1,2 bis 1:1,9 liegt.

11. Verfahren nach einem der Ansprüche 8-10, wobei die zweite Fraktion mindestens 25 % des Trockengewichts des Deckschichtstoffs, beispielsweise mindestens 35 % des Trockengewichts des Deckschichtstoffs, beispielsweise mindestens 45 % des Trockengewichts des Deckschichtstoffs ausmacht.

12. Verfahren nach einem der Ansprüche 8 bis 11, wobei der Deckschichtstoff ferner einen gebleichten chemischen Zellstoff, wie beispielsweise einen gebleichten Kraftzellstoff, aufweist.

13. Verfahren nach einem der Ansprüche 8 bis 12, wobei die zweite Fraktion einen Schopper-Riegler-Wert, gemessen nach ISO 5267-1:1999, von über 31 aufweist.

14. Verfahren nach einem der vorhergehenden Ansprüche, wobei die Grammatur der Mittelschicht höher als die Grammatur der Deckschicht ist.

15. Verfahren nach Anspruch 14, wobei die Grammatur der Mittelschicht höher als die Grammatur der Deckschicht und der Rückschicht ist.

16. Karton, aufweisend eine Deckschicht, eine Rückschicht und eine Mittelschicht, wobei die Mittelschicht aufweist:
- eine erste Fraktion eines Zellstoffs aus recycelten gebleichten Fasern, wobei die erste Fraktion einen Schopper-Riegler-Wert, gemessen nach ISO 5267-1:1999, von unter 24 aufweist;
- chemothermomechanischen Zellstoff (CTMP),
wobei die erste Fraktion mindestens 15 % des Trockengewichts der Mittelschicht ausmacht und der CTMP mindestens 20 % des Trockengewichts der Mittelschicht ausmacht.

## Revendications

1. Procédé de production d'un carton comprenant une couche supérieure, une couche arrière et une couche intermédiaire, ledit procédé comprenant les étapes suivantes :
- la fourniture d'une première fraction d'une pâte de fibres blanchies recyclées, laquelle première fraction a une valeur de Schopper-Riegler mesurée selon la norme ISO 5267-1:1999 inférieure à 24 ;
- la formation d'une couche intermédiaire composée d'une pâte chimico-thermomécanique (PCTM) et de la première fraction ; et
- la formation de ladite couche intermédiaire à partir dudit produit d'alimentation de la couche intermédiaire
dans lequel la première fraction représente au moins 15 % en poids sec de l'élément d'ameublement de la couche intermédiaire et la PCTM représente au moins 20 % en poids sec de l'élément d'ameublement de la couche intermédiaire.

2. Procédé selon la revendication 1, dans lequel la première fraction représente au moins 25 % en poids sec de l'élément d'ameublement de la couche intermédiaire.

3. Procédé selon la revendication 1 ou la revendication 2, dans lequel la PTCM représente au moins 30 % en poids sec de l'élément d'ameublement de la couche intermédiaire.

4. Procédé selon l'une quelconque des revendications précédentes, dans lequel ledit élément d'ameublement de la couche intermédiaire comprend en outre de la pâte brisée.

5. Procédé selon la revendication 4, dans lequel la pâte brisée représente au moins 12 % en poids sec de l'élément d'ameublement de la couche intermédiaire, tel qu'au moins 17 % en poids sec de l'élément d'ameublement de la couche intermédiaire.

6. Procédé selon l'une quelconque des revendications précédentes, dans lequel la première fraction a une valeur de Schopper-Riegler mesurée selon la norme ISO 5267-1:1999 inférieure à 22, telle qu'inférieure à 20.

7. Procédé selon l'une quelconque des revendications précédentes, dans lequel la première fraction est obtenue par fractionnement hydrocyclonique de la pâte de fibres blanchies recyclées.

8. Procédé selon l'une quelconque des revendications précédentes, dans lequel la couche supérieure est une couche supérieure blanche, ledit procédé comprenant en outre :
- la fourniture d'une deuxième fraction de la pâte de fibres blanchies recyclées, laquelle deuxième fraction a une valeur de Schopper-Riegler mesurée selon la norme ISO 5267-1:1999 supérieure à 24 ;
- la formation d'une couche supérieure composée de la deuxième fraction ; et
- la formation de ladite couche supérieure à partir dudit élément d'ameublement de la couche supérieure.

9. Procédé selon la revendication 8, dans lequel la deuxième fraction est obtenue par fractionnement hydrocyclonique de la pâte de fibres blanchies recyclées.

10. Procédé selon la revendication 8 ou la revendication 9, dans lequel le rapport entre le débit massique de la première fraction et celui de la deuxième fraction est compris entre 1:1 et 1:2, tel que compris entre 1:1.1 et 1:2, tel que compris entre 1:1.2 et 1:1.9.

11. Procédé selon l'une des revendications 8 à 10, dans lequel la deuxième fraction représente au moins 25 % en poids sec de l'élément d'ameublement de la couche supérieure, tel qu'au moins 35 % en poids sec de l'élément d'ameublement de la couche supérieure, tel qu'au moins 45 % en poids sec de l'élément d'ameublement de la couche supérieure.

12. Procédé selon l'une quelconque des revendications 8 à 11, dans lequel l'élément d'ameublement de la couche supérieure comprend en outre une pâte chimique blanchie, telle qu'une pâte kraft blanchie.

13. Procédé selon l'une quelconque des revendications 8 à 12, dans lequel la deuxième fraction a une valeur de Schopper-Riegler mesurée selon la norme ISO 5267-1:1999 supérieure à 31.

14. Procédé selon l'une quelconque des revendications précédentes, dans lequel le grammage de la couche intermédiaire est supérieur au grammage de la couche supérieure.

15. Procédé selon la revendication 14, dans lequel le grammage de la couche intermédiaire est supérieur au grammage de chacune de la couche supérieure et de la couche arrière.

16. Carton comprenant une couche supérieure, une couche arrière et une couche intermédiaire, dans lequel la couche intermédiaire comprend :
- une première fraction d'une pâte de fibres blanchies recyclées, laquelle première fraction a une valeur de Schopper-Riegler mesurée selon la norme ISO 5267-1:1999 inférieure à 24 ; et
- de la pâte chimio-thermomécanique (PCTM)
dans lequel la première fraction constitue au moins 15 % en poids sec de la couche intermédiaire et la PCTM constitue au moins 20 % en poids sec de la couche intermédiaire.
